# EUROPEAN PATENT APPLICATION

(11) **EP 4 755 176 A1**
(43) Date of publication of application: **10.06.2026**
(21) Application number: 25220285.8
(22) Date of filing: 03.12.2025
(51) Int. Cl.: A01G 9/24, F21V 5/00, F21V 7/00, F21V 19/00

(54) **LASER SUPPLEMENTARY LIGHTING SYSTEM FOR PLANT FACTORIES**

(30) Priority: 03.12.2024 CN 202411763595
(71) Applicant: Changchun Institute of Optics, Fine Mechanics and Physics, Chinese Academy of Sciences, Jilin 130033 (CN); Jilin Changguang Jixin Technology Co., Ltd., Changchun Jilin 130033 (CN)
(72) Inventor: JIA, Peng, Changchun (CN); QIN, Li, Changchun (CN); CAO, Junsheng, Changchun (CN); CHEN, Yongyi, Changchun (CN); LIANG, Lei, Changchun (CN); SONG, Yue, Changchun (CN); WANG, Lijun, Changchun (CN)
(74) Representative: Plavsa, Olga

(57) **Abstract**

The laser supplementary lighting system for plant factories includes a laser emitter (1), a control circuit (2), a lens array (3), and first and a second reflector arrays (4,5); collimating lenses (13,17) are arranged in the laser emitter (1); the collimating lenses (13,17) collimate laser beams into collimated beams with a divergence angle of less than 0.3°; a bottom surface of the laser emitter (1) and emission ports on both sides in a horizontal direction are configured to emit long-wave laser beams and short-wave laser beams; three laser beams emitted from the laser emitter (1) are reflected by the first reflector array (4), reflected by the second reflector array (5), and homogenized by the lens array (3), respectively, and then projected downward to form rectangular light spots. The disclosure has the advantages of low energy consumption and low cost and realizes a high-uniformity multi-wavelength laser field with a large area at a short distance.

## Description

### TECHNICAL FIELD

The invention relates to the technical field of supplementary lighting equipment for plant cultivation, and in particular to a laser supplementary lighting system for plant factories.

### BACKGROUND

The plant factories achieve stable year-round production through artificial environmental control, effectively addressing issues such as land resource scarcity and seasonal limitations. They adopt water-saving and energy-saving technologies to significantly reduce water consumption; meanwhile, by precisely controlling light, temperature, and nutrient solutions, they increase yields and ensure food safety. The lighting sources, particularly LEDs, are crucial for plant factories; LEDs simulate natural light to provide the spectral range required for plant growth, and through intelligent regulation, they optimize plant growth cycles and quality, enabling efficient agricultural production. However, LEDs suffer from high energy consumption, which hinders the large-scale application of plant factories.

The semiconductor lasers offer advantages such as high energy efficiency, long lifespan, and easy regulation in agricultural lighting, providing ideal light conditions for plant growth. They can emit light of specific wavelengths to promote plant photosynthesis and increase yields. The precise spectral control helps simulate natural light or the light requirements of specific growth stages while reducing energy consumption. The supplementary lighting for plant factories is a spectral regulation technology that uses high-power semiconductor lasers as light sources; it requires irradiating laser light of specific wavelengths with appropriate power density onto crop growth points and leaves, leveraging the coherence of lasers to improve the light energy utilization efficiency of crop on natural light or LED light and realizing efficient regulation of crop growth rate and nutrient accumulation. At the same time, it reduced LED light energy consumption and lowered the overall energy consumption and production costs of plant factories.

Currently, the mainstream light source for plant factories is LED lamps, and there are relatively few laser lighting devices designed for plant factories; for example, it includes laser lighting systems based on diffused optical fibers, artificial light systems based on complex optical paths (e.g., prisms, reflectors), supplementary lighting systems based on multi-source light mixing technology, and laser supplementary lighting systems for plant factories based on automatic displacement devices. Although existing agricultural supplementary lighting lamps for plant factories have made significant progress in improving light intensity and automation, they still have various drawbacks, as detailed below.

The laser lighting systems based on diffused optical fibers use optical components such as focusing lenses and reflectors to couple multiple multi-wavelength laser beams into optical fibers, which then irradiate the lasers onto crops to trigger reactions of plant photosynthetic pigments. However, these systems have complex structures and high insertion losses of optical components.

The artificial light systems based on complex optical paths (e.g., prisms, reflectors) use multiple optical lenses to shape and transmit laser beams. Each optical path requires at least three lenses, resulting in an extremely complex structure. Additionally, the optical paths are open, requiring a dust-free environment to avoid energy loss, making them difficult to popularize.

The supplementary lighting systems based on multi-source light mixing technology use laser sources of multiple wavelengths or LED sources for crop supplementary lighting. A large number of lasers are needed to meet crop growth requirements, leading to high installation costs and large engineering volumes, which fail to meet the demand for low-cost light sources in plant factories.

The laser supplementary lighting systems for plant factories based on automatic displacement devices use automatically moving guide rails to shift laser lamps, allowing a small number of lasers to provide supplementary lighting for large-area plants. However, their mechanical structures suffer from wear and poor stability, and they have high requirements for the operating environment.

The conventional laser supplementary lighting devices for plant factories generally adopt complex mechanical or optical path structures, leading to problems such as high environmental requirements, poor stability, and high costs. These issues seriously affect the application prospects of supplementary lighting devices in plant factories.

### SUMMARY

To solve the above problems, the invention provides a laser supplementary lighting system for plant factories.

The objective of the invention is to provide a laser supplementary lighting system for plant factories, comprising a laser emitter, a control circuit, a lens array, a first reflector array, and a second reflector array.

wherein the control circuit is arranged above the laser emitter, and the lens array is arranged below the laser emitter; a Laser emitting apparatus, a first reflector array and a second reflector array are arranged on a same straight line, and the first reflector array and the second reflector array are arranged on both sides of the laser emitter in a horizontal direction, respectively.

wherein a collimating lens is arranged in the laser emitter; the collimating lens collimates a laser beam into a collimated beam with a divergence angle of less than 0.3°.

wherein a bottom surface of the laser emitter and emission ports on both sides in a horizontal direction is configured to emit long-wave laser beams and short-wave laser beams; three laser beams emitted from the laser emitter are reflected by the first reflector array, reflected by the second reflector array, and homogenized by the lens array, respectively, and then projected downward to form rectangular light spots.

Preferably, the laser emitter comprises a device housing, a laser emission device, a first horizontal light outlet, a second horizontal light outlet, and a lower light outlet.

wherein the laser emission device is fixed on a top of the device housing; the first horizontal light outlet and the second horizontal light outlet are arranged on both sides of the device housing, respectively; the lower light outlet is arranged at a bottom of the device housing.

wherein the first reflector array is arranged in front of the first horizontal light outlet; the second reflector array is arranged in front of the second horizontal light outlet.

Preferably, the laser emission device is provided with a short-wave horizontal cavity surface emitting laser, a long-wave horizontal cavity surface emitting laser, a packaging heat sink, and a light outlet on a bottom surface of the emitting laser.

wherein the short-wave horizontal cavity surface emitting laser and the long-wave horizontal cavity surface emitting laser are packaged on the packaging heat sink; the laser emission device is fixed on a top of an inner side of the device housing by the packaging heat sink.

wherein a first collimating lens is arranged at each of emission ports on both sides of the short-wave horizontal cavity surface emitting laser; a second collimating lens is arranged at each of emission ports on both sides of the long-wave horizontal cavity surface emitting laser; a curvature of the first collimating lens and a curvature of the second collimating lens are different.

Preferably, the first collimating lens comprises a first mirror surface and a second mirror surface, a curvature of the first mirror surface is 0.67±0.2, and a curvature of the second mirror surface is -0.53±0.1; the second collimating lens comprises a first mirror surface and a second mirror surface, a curvature of the first mirror surface is 0.92±0.2, and a curvature of the second mirror surface is -0.53±0.1.

Preferably, a distance between the laser emitter and the first reflector array and a distance between the laser emitter and the second reflector array are 2-3 meters, respectively.

Preferably, the first reflector array and the second reflector array have a same structure and are both inclined relative to a horizontal plane and are configured to project light beams downward.

Preferably, an inclination angle between the first reflector array and the second reflector array is 45 degrees.

Preferably, the laser emitter, the first reflector array and the second reflector array are arranged at a position 0.4-0.6 meters directly above an irradiated plant.

Preferably, a laser energy projected by the laser supplementary lighting system for plant factories onto the irradiated plants is 0.5µmol/m²/s.

Preferably, the material of the packaging heat sink is ceramic.

Compared with the prior art, the invention can achieve the following beneficial effects:

The invention provides a miniaturized laser device based on semiconductor lasers and a beam-shaping lens group, and provides a low-cost light regulation technology for three-dimensional planting scenarios such as plant factories; it solves the problems of high using environmental requirements, poor stability, and high costs of existing laser supplementary lighting devices for plant factories. By adopting a mini laser emission device based on transmission/reflection-type light homogenization technology and horizontal cavity surface emitting lasers (HCSELs), three light homogenizing mirrors are used to shape the laser beams emitted by the HCSELs in three directions, obtaining a rectangular light field; this improves the energy uniformity of the light beam, reduces the number of laser devices and lenses used, and forms a large-area light field (over 5 square meters) on the surface of plant growth racks at a distance of 0.4-0.6 meters; it ensures that all crops receive laser energy exceeding 0.5µmol/m²/s, realizing a high-uniformity multi-wavelength laser field with a large area at a short distance; when cooperates with the existing LED light sources in plant factories, it activates efficient photosynthesis of crops, thereby increasing crop yield and quality. Therefore, the invention provides a low-energy-consumption and low-cost laser lighting system for plant factories.

### BRIEF DESCRIPTION OF DRAWINGS

Fig. 1 is an overall schematic diagram of a laser supplementary lighting system for plant factories and its light field distribution according to an embodiment of the invention.
Fig. 2 is a front view of the laser supplementary lighting system for plant factories and its light field distribution according to an embodiment of the invention.
Fig. 3 is a schematic diagram of collimated light beams of the laser supplementary lighting system for plant factories according to an embodiment of the invention.
Fig. 4 is a structural schematic diagram of a laser emitter in the laser supplementary lighting system for plant factories according to an embodiment of the invention.
Fig. 5 is a cross-sectional schematic diagram of the laser emitter in the laser supplementary lighting system for plant factories according to an embodiment of the invention.
Fig. 6 is a structural schematic diagram of a reflector array in the laser supplementary lighting system for plant factories according to an embodiment of the invention.
Fig. 7 is a plan view of the reflector array in the laser supplementary lighting system for plant factories according to an embodiment of the invention.

### Reference Signs:

1. Laser emitting apparatus; 11. Device housing; 13. First collimating lens; 14. First horizontal light outlet; 15. Second horizontal light outlet; 16. Lower light outlet; 17. Second collimating lens; 121. Short-wave horizontal cavity surface emitting laser; 122. Long-wave horizontal cavity surface emitting laser; 123. Light outlet on bottom surface of emitting laser; 124. Packaging heat sink; 2. Control circuit; 3. Lens array; 4. First reflector array; 5. Second reflector array; 61. First collimated laser beam; 62. Second collimated laser beam; 63. Third collimated laser beam; 81. First rectangular light spot; 82. Second rectangular light spot; 83. Third rectangular light spot.

### DETAILED DESCRIPTION

Hereinafter, embodiments of the invention will be described with reference to the drawings. In the following description, the same modules are denoted by the same reference signs. When reference signs are the same, their names and functions are also the same. Therefore, their detailed descriptions will not be repeated.

To make the objectives, technical solutions, and advantages of the invention clearer, the invention will be further described in detail below with reference to the drawings and specific embodiments. It should be understood that the specific embodiments described herein are only for explaining the invention and do not constitute a limitation on the invention.

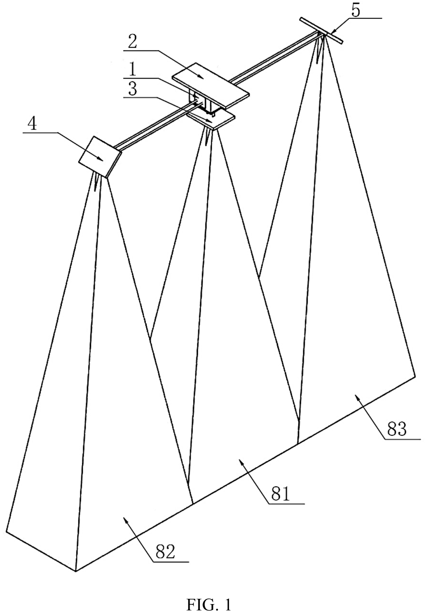

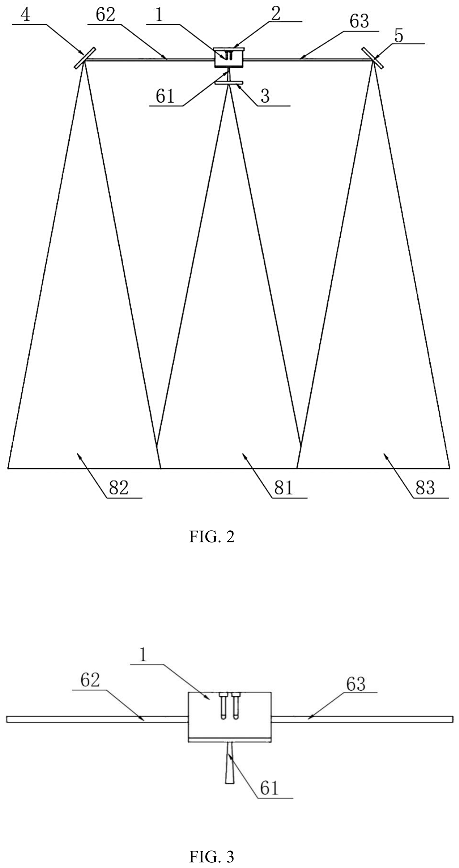

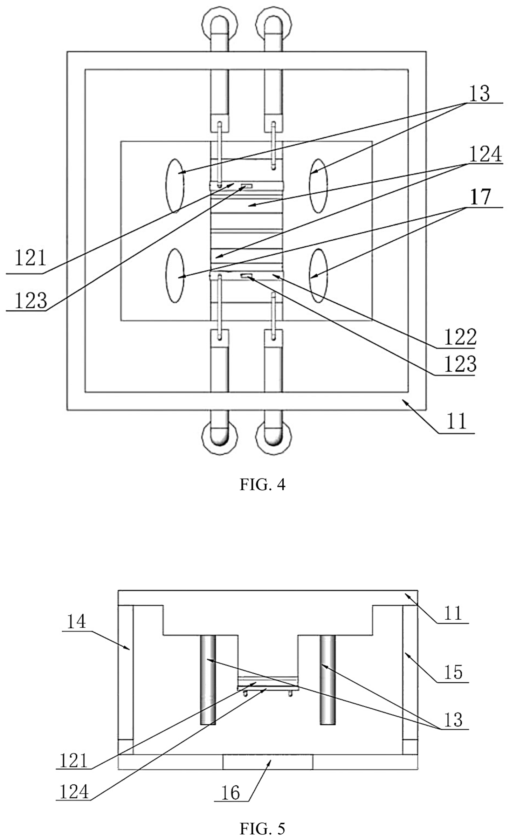

Referring to Figs. 1 to 7, the embodiment provides a laser supplementary lighting system for plant factories, comprising a laser emitter 1, a control circuit 2, a lens array 3, a first reflector array 4, and a second reflector array 5.

The laser emitter 1 comprises a device housing 11, a laser emission device, a collimating lens 13, a first horizontal light outlet 14, a second horizontal light outlet 15, and a lower light outlet 16.

The first horizontal light outlet 14 and the second horizontal light outlet 15 are arranged on both sides of the device housing 11, respectively; the lower light outlet 16 is arranged at a bottom of the device housing 11.

The laser emission device is provided with a short-wave horizontal cavity surface emitting laser 121, a long-wave horizontal cavity surface emitting laser 122, and a light outlet 123 on the bottom surface of the emitting laser; the short-wave horizontal cavity surface emitting laser 121 and the long-wave horizontal cavity surface emitting laser 122 are packaged on a packaging heat sink 124.
the laser emission device is fixed on a top of an inner side of the device housing 11 by the packaging heat sink124.

In a specific embodiment, the material of the packaging heat sink 124 is ceramic to ensure the sealing performance and heat dissipation capability of the device.

There are 4 collimating lenses is provided; a first collimating lens 13 is provided at each of the emission ports on both sides (Y and -Y directions) of the short-wave horizontal cavity surface emitting laser 121; a second collimating lens 17 is provided at each of the emission ports on both sides of the long-wave horizontal cavity surface emitting laser 122; in a specific embodiment, the first collimating lens 13 comprises a first mirror surface and a second mirror surface, a curvature of the first mirror surface is 0.67±0.2, and a curvature of the second mirror surface is -0.53±0.1; the second collimating lens 17 comprises a first mirror surface and a second mirror surface, a curvature of the first mirror surface is 0.92±0.2, and a curvature of the second mirror surface is -0.53±0.1.

The laser emission device can emit both long-wave laser beams and short-wave laser beams from both sides in the horizontal direction (Y and -Y directions) and its bottom surface (Z direction).

The control circuit 2 is arranged above the Laser emitting apparatus 1; the lens array 3 is arranged below the lower light outlet 16.

The Laser emitting apparatus 1, the first reflector array 4, and the second reflector array 5 are arranged on the same straight line.

The first reflector array 4 is provided on one side of the first horizontal light outlet 14; the second reflector array 5 is respectively provided on one side of the second horizontal light outlet 15; that is, the first reflector array 4 and the second reflector array 5 are respectively disposed in front of the horizontal light outlets on both sides of the Laser emitting apparatus 1.

The first reflector array 4 and the second reflector array 5 have the same structure, and both are inclined at an angle of 45 degrees relative to the horizontal plane to project light beams downward; in a specific embodiment, the first reflector array 4 is inclined at a positive 45-degree angle, and the second reflector array 5 is inclined at a negative 45-degree angle.

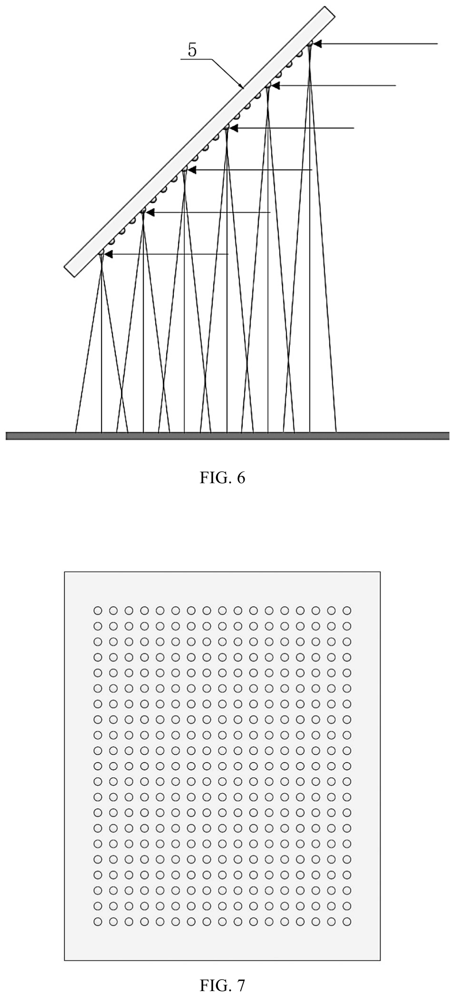

The first reflector array 4 and the second reflector array 5 are provided with a number of reflection units, each of which reflects a part of the light energy, and the reflected light beams of the multiple reflection units form a uniform light field (see Figs. 6-7).

The first reflector array 4 and the second reflector array 5 can also be replaced by light homogenizing components; each light homogenizing component includes a high-reflectivity mirror and a lens group composed of a lens array, which reflects the horizontally transmitted focused light beam to the lens array, and the lens array homogenizes the focused light beam.

The short-wave horizontal cavity surface emitting laser 121 and the long-wave horizontal cavity surface emitting laser 122 are respectively provided with electrode pins; after direct current is input through the electrode pins, three laser beams with the same energy are emitted in three directions: both sides (Y and -Y directions) and the light outlet 123 on the bottom surface of the emitting laser (Z direction); the light beams in the Y and -Y directions are collimated by the first collimating lens 13 and the second collimating lens 17 into collimated beams with a divergence angle of less than 0.3°, which reduces the transmission loss of spatial energy and the area of light spots formed on the first reflector array 4 and the second reflector array 5.

### Embodiment 1

The invention provides a laser supplementary lighting system for plant factories, comprising a laser emitter, a control circuit, a lens array, a first reflector array, and a second reflector array.

The laser emitter 1 comprises a device housing 11, a laser emission device, a collimating lens 13, a first horizontal light outlet 14, a second horizontal light outlet 15, and a lower light outlet 16.

The first horizontal light outlet 14 and the second horizontal light outlet 15 are arranged on both sides of the device housing 11, respectively; the lower light outlet 16 is arranged at a bottom of the device housing 11.

The laser emission device is provided with a short-wave horizontal cavity surface emitting laser 121, a long-wave horizontal cavity surface emitting laser 122, and a light outlet 123 on the bottom surface of the emitting laser; the short-wave horizontal cavity surface emitting laser 121 and the long-wave horizontal cavity surface emitting laser 122 are packaged on a packaging heat sink 124.

The laser emission device is fixed on a top of an inner side of the device housing 11 by the packaging heat sink124.

The material of the packaging heat sink 124 is ceramic to ensure the sealing performance and heat dissipation capability of the device.

There are 4 collimating lenses is provided; a first collimating lens 13 is provided at each of the emission ports on both sides (Y and -Y directions) of the short-wave horizontal cavity surface emitting laser 121; a second collimating lens 17 is provided at each of the emission ports on both sides of the long-wave horizontal cavity surface emitting laser 122; the first collimating lens 13 comprises a first mirror surface and a second mirror surface, a curvature of the first mirror surface is 0.67±0.2, and a curvature of the second mirror surface is -0.53±0.1; the second collimating lens 17 comprises a first mirror surface and a second mirror surface, a curvature of the first mirror surface is 0.92±0.2, and a curvature of the second mirror surface is -0.53±0.1.

The control circuit 2 is arranged above the Laser emitting apparatus 1; the lens array 3 is arranged below the lower light outlet 16.

The Laser emitting apparatus 1, the first reflector array 4, and the second reflector array 5 are arranged in a straight line; the first reflector array 4 and the second reflector array 5 are respectively disposed in front of the horizontal light outlets on both sides of the Laser emitting apparatus 1.

The first reflector array 4 is inclined at a positive 45-degree angle, and the second reflector array 5 is inclined at a negative 45-degree angle; the first reflector array 4 and the second reflector array 5 are provided with a number of reflection units, each of which reflects a part of the light energy, and the reflected light beams of the multiple reflection units form a uniform light field (see Figs. 6-7).

### Embodiment 2

The invention provides a laser supplementary lighting system for plant factories, comprising a Laser emitting apparatus, a control circuit, a lens array, and a light homogenizing component.

The light homogenizing component includes a high-reflectivity mirror and a lens group composed of a lens array; the light homogenizing component replaces the reflector arrays in Embodiment 1, reflects the horizontally transmitted focused light beam to the lens array, and the lens array homogenizes the focused light beam.

In the structure, except for the arrangement of the light homogenizing component, which is different from that in Embodiment 1, the arrangement of other components is the same as that in Embodiment 1.

### Embodiment 3

Referring to Figs. 1 to 7, the embodiment provides a laser supplementary lighting system for plant factories, comprising a laser emitter 1, a control circuit 2, a lens array 3, a first reflector array 4, and a second reflector array 5, the structure is the same as that in Embodiment 1.

The distance between the first reflector array 4 and the second reflector array 5 and the Laser emitting apparatus 1 is 2-3 meters.

Preferably, the Laser emitting apparatus 1, the first reflector array 4 and the second reflector array 5 are arranged at a position 0.4-0.6 meters directly above an irradiated plant.

The laser beam emitted from the lower light outlet 16 of the Laser emitting apparatus 1 and the laser beams reflected by the first reflector array 4 and the second reflector array 5 enable the crops to obtain laser energy exceeding 0.5µmol/s per square meter.

The lower light outlet 16 of the Laser emitting apparatus 1 emits a first rectangular light spot 81, the first reflector array 4 emits a second rectangular light spot 82, and the second reflector array 5 emits a third rectangular light spot 83; the edges of the first rectangular light spot 81 are respectively superimposed with the light beams of the second rectangular light spot 82 and the third rectangular light spot 83; the first rectangular light spot 81, the second rectangular light spot 82, and the third rectangular light spot 83 form a large-area light field with an area exceeding 5 square meters.

The three rectangular light spots form a large-area light field with an area exceeding 5 square meters, irradiate the crops, and ensure that the irradiated crops are provided with laser energy of 0.5µmol/s per square meter (i.e., 0.5µmol/m²/s); the laser supplementary lighting system for plant factories achieves a light energy distribution uniformity of more than 80% in a short-distance and large-area, and when cooperates with the existing LED light sources in plant factories, it activates efficient photosynthesis of crops, thereby increasing crop yield and quality.

### Application Example

Applying the laser supplementary lighting system for plant factories of the invention to irradiate Rosaceae plants such as strawberries in plant factories can achieve effects such as increasing yield by 10%-40%, increasing sugar content by 2-5%, and inhibiting gray mold and anthracnose.

It should be understood that the various forms of processes shown above can be reordered, added to, or deleted from. For example, each step described in the invention can be executed in parallel, sequentially, or in different orders, as long as the desired results of the technical solution in the invention can be achieved, which is not limited herein.

The above-mentioned specific embodiments do not constitute a limitation on the protection scope of the invention. It should be understood by those skilled in the art that various modifications, combinations, sub-combinations, and substitutions can be made according to design requirements and other factors. Any modifications, equivalent substitutions, improvements, etc. made within the spirit and principles of this disclosure shall be included within the scope of the claims of this disclosure.

## Claims

1. A laser supplementary lighting system for plant factories, comprising a laser emitter, a control circuit, a lens array, a first reflector array, and a second reflector array;
wherein the control circuit is arranged above the laser emitter, and the lens array is arranged below the laser emitter; a Laser emitting apparatus, a first reflector array and a second reflector array are arranged on a same straight line, and the first reflector array and the second reflector array are arranged on both sides of the laser emitter in a horizontal direction, respectively;
wherein a collimating lens is arranged in the laser emitter; the collimating lens collimates a laser beam into a collimated beam with a divergence angle of less than 0.3°;
wherein a bottom surface of the laser emitter and emission ports on both sides in a horizontal direction is configured to emit long-wave laser beams and short-wave laser beams; three laser beams emitted from the laser emitter are reflected by the first reflector array, reflected by the second reflector array, and homogenized by the lens array, respectively, and then projected downward to form rectangular light spots.

2. The laser supplementary lighting system for plant factories according to claim 1, wherein the laser emitter comprises a device housing, a laser emission device, a first horizontal light outlet, a second horizontal light outlet, and a lower light outlet;
wherein the laser emission device is fixed on a top of the device housing; the first horizontal light outlet and the second horizontal light outlet are arranged on both sides of the device housing, respectively; the lower light outlet is arranged at a bottom of the device housing;
wherein the first reflector array is arranged in front of the first horizontal light outlet; the second reflector array is arranged in front of the second horizontal light outlet.

3. The laser supplementary lighting system for plant factories according to claim 2, wherein the laser emission device is provided with a short-wave horizontal cavity surface emitting laser, a long-wave horizontal cavity surface emitting laser, a packaging heat sink, and a light outlet on a bottom surface of the emitting laser;
wherein the short-wave horizontal cavity surface emitting laser and the long-wave horizontal cavity surface emitting laser are packaged on the packaging heat sink; the laser emission device is fixed on a top of an inner side of the device housing by the packaging heat sink;
wherein a first collimating lens is arranged at each of emission ports on both sides of the short-wave horizontal cavity surface emitting laser; a second collimating lens is arranged at each of emission ports on both sides of the long-wave horizontal cavity surface emitting laser; a curvature of the first collimating lens and a curvature of the second collimating lens are different.

4. The laser supplementary lighting system for plant factories according to claim 3, wherein the first collimating lens comprises a first mirror surface and a second mirror surface, a curvature of the first mirror surface is 0.67±0.2, and a curvature of the second mirror surface is -0.53±0.1; the second collimating lens comprises a first mirror surface and a second mirror surface, a curvature of the first mirror surface is 0.92±0.2, and a curvature of the second mirror surface is -0.53±0.1.

5. The laser supplementary lighting system for plant factories according to claim 1, wherein a distance between the laser emitter and the first reflector array and a distance between the laser emitter and the second reflector array are 2-3 meters, respectively.

6. The laser supplementary lighting system for plant factories according to claim 1, wherein the first reflector array and the second reflector array have a same structure and are both inclined relative to a horizontal plane and are configured to project light beams downward.

7. The laser supplementary lighting system for plant factories according to claim 6, wherein an inclination angle between the first reflector array and the second reflector array is 45 degrees.

8. The laser supplementary lighting system for plant factories according to claim 1, wherein the laser emitter, the first reflector array and the second reflector array are arranged at a position 0.4-0.6 meters directly above an irradiated plant.

9. The laser supplementary lighting system for plant factories according to claim 1, wherein a laser energy projected by the laser supplementary lighting system for plant factories onto the irradiated plants is 0.5µmol/m²/s.

10. The laser supplementary lighting system for plant factories according to claim 3, wherein a material of the packaging heat sink is ceramic.

11. The laser supplementary lighting system for plant factories according to claim 1, wherein the first reflector array and the second reflector array are provided with a plurality of reflection units, each reflection unit reflects a part of the light energy, and light beams reflected by the plurality of reflection units form a uniform light field.

12. The laser supplementary lighting system for plant factories according to claim 2, wherein the lens array is disposed below the lower light outlet.

13. The laser supplementary lighting system for plant factories according to claim 2, wherein the lower light outlet emits a first rectangular light spot, the first reflector array emits a second rectangular light spot, and the second reflector array emits a third rectangular light spot; edges of the first rectangular light spot are respectively superimposed with the light beams of the second rectangular light spot and the third rectangular light spot.

14. The laser supplementary lighting system for plant factories according to claim 13, wherein the first rectangular light spot, the second rectangular light spot, and the third rectangular light spot form a large-area light field with an area exceeding 5 square meters.

15. The laser supplementary lighting system for plant factories according to claim 13, wherein the short-wave horizontal cavity surface emitting laser and the long-wave horizontal cavity surface emitting laser are respectively provided with electrode pins; after direct current is input by the electrode pins, three laser beams with a same energy are emitted in three directions including both sides and the light outlet hole on a bottom surface of the emitting laser.
